# EUROPEAN PATENT APPLICATION

(11) **EP 1 304 252 A1**
(43) Date of publication of application: **23.04.2003**
(21) Application number: 02257263.0
(22) Date of filing: 18.10.2002
(51) Int. Cl.: B60L 11/00, F16C 1/00

(54) **Bearing system for vehicle motor and axle**

(30) Priority: 19.10.2001 US 36760
(71) Applicant: GENERAL ELECTRIC COMPANY, Schenectady, NY 12345 (US)
(72) Inventor: Jones, Michael L., Roanoke, Indiana 46783 (US); O'Bryan, James E., Fort Wayne, Indiana 46804 (US); Koller, Michael R., Columbia City, Indiana 46725 (US); Klug, Peter J., Fort Wayne, Indiana 46818 (US)
(74) Representative: Pedder, James Cuthbert

(57) **Abstract**

A method and apparatus providing for a small vehicle motor (8). The motor (8) includes a motor shell (6), a drive shaft housing (16) disposed in the motor(8), and an extended drive shaft (14) disposed in the drive shaft housing (16). The extended drive shaft (14) replaces conventional couplings and separate axles and thereby reduces the number of bearings needed. Noise and the possibility of misalignment are also reduced by the extended drive shaft (14) of the motor (8), which is coupled directly to a vehicle axle drive gear (32).

## Description

This invention relates to motor bearing systems, and, more particularly, to a bearing system for a vehicle motor assembly.

More and more vehicle users are choosing not to operate full-size automobiles for leisure activities or for their short-distance transportation needs. Instead, many users choose to operate small, more efficient vehicles such as golf cars and the like for general transportation, business, and maintenance needs on campuses, in neighborhoods, and for leisure activities. Small vehicles like golf cars are now seen on city streets, neighborhood communities, and off-road environments, as well as on the golf courses.

Many golf cars are powered by electric motors, which have become powerful and efficient enough to carry users at reasonable speeds over ever-increasing distances. Traditional electrically powered golf cars are fairly quiet and easy to operate, and they do not requiring the ignition of an internal combustion engine at each use. Such electrically powered vehicles also introduce no emissions.

Small vehicles like electrically powered golf cars are, however, prone to electric motor and transmission noise that many users find to be a nuisance. A primary cause of noise associated with the electric golf car motors is the traditional coupling of the motor to the axle of the driven wheel or wheels.

Traditional motor assemblies found in small electric vehicles include a drive shaft that extends from the motor housing. The drive shaft of the typical small electric vehicle motor is often splined to facilitate engagement with a coupling sleeve. The coupling sleeve connects the drive shaft to a separate drive axle, and the drive axle generally has a drive gear mounted thereon to drive a vehicle wheel.

There are many problems associated with the coupling sleeve. Typically, the coupling sleeve is relatively long and is prone to allowing misalignment between the drive shaft and the axle. Further, the dual coupling sleeve connections to the drive shaft and the drive axle generate noise and vibration to the dismay of the users. In addition, it is necessary to provide at least three bearings to the typical motor/axle assembly. There is typically a motor bearing at one end of the motor/axle assembly, an axle bearing at the opposite end of the assembly, and also a second axle bearing between the coupling sleeve and an axle drive gear. The second axle bearing adds expense and noise to the motor/axle assembly.

In addition the coupling typically requires hardening and additional components such as a rubber bumper and special grease. The additional components and grease are necessary to attempt to reduce wear and noise. However, quieter running motor assemblies and lower costs are desired.

The present invention attempts to eliminate, or at least reduce the effects of, one or more of the problems stated above.

According to a first aspect of the invention, there is provided an apparatus including a motor having a motor shell, a drive shaft housing disposed in the motor, and a drive shaft disposed in the drive shaft housing extending from the motor shell, with the drive shaft directly engaging a vehicle axle drive gear.

The apparatus may further include a drive gear assembly coupled to the motor shell. The drive shaft disposed in the drive shaft housing may extend from the motor shell into the drive gear assembly and may includes a drive axle portion.

The apparatus may include only one motor bearing and only one axle bearing. The only one axle bearing may be disposed at a first end of the drive shaft and the only one motor bearing may be disposed at a second end of the drive shaft, where the first end of the drive shaft is located opposite a motor side of the axle drive gear. According to this aspect of the invention, there may be a nut attached to the first end of the drive shaft for securing the axle bearing to the drive shaft.

There may be an access port in the drive gear assembly.

In one embodiment of the invention there is no motor coupling or motor coupling sleeve between the drive shaft and the drive gear assembly.

A lubrication seal may be provided between the motor shell and the drive gear assembly.

A plurality of splines may be disposed at a first end of the drive shaft, the plurality of splines engaging mating recesses of the vehicle axle drive gear. The splines may include square teeth. Alternatively, the splines may include involute teeth.

The drive shaft may include a plurality of steps for providing one or more shoulder surfaces. The one or more shoulder surfaces may include at least one of an axle bearing surface, a gear surface, and an oil seal surface.

The motor may be an electric motor, preferably an electric vehicle motor. The electric vehicle motor may be a golf car motor and the electric vehicle motor may be coupled to a golf car for driving at least one wheel thereof.

According to a second aspect of the invention, there is provided an electric vehicle including a chassis, a plurality of wheels, and an electric motor for driving at least one of the plurality of wheels, where the electric motor includes a drive shaft directly engaged with an axle drive gear, the axle drive gear being operatively connected to an axle of the at least one of the plurality of wheels. The electric motor and axle drive gear may include no more than two bearings. The vehicle may be a golf cart.

According to an embodiment of the invention, the electric motor further includes a motor shell, and the drive shaft includes an extended drive shaft extending from the motor shell. The extended drive shaft may extend from the motor shell at least three inches.

According to a third aspect of the invention, there is provided a method of driving a vehicle wheel including the step of directly coupling a motor drive shaft to a wheel axle drive gear. The motor drive shaft may be operatively connected to an electric motor, and the electric motor, motor drive shaft, and wheel axle drive gear may include no more than two bearings. The vehicle wheel may be attached to an electric golf cart.

The invention will now be described in greater detail, by way of example, with reference to the drawings, in which:-
Figure 1 is a cut away view of a motor assembly according to one embodiment of the present invention.
Figure 2 is a cut away view of a motor assembly according to another embodiment of the present invention.
Figure 3 is a side view of a golf cart according to one embodiment of the present invention.

Throughout the drawings, identical elements are designated by identical reference numbers.

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, that will vary from one implementation to another. Moreover, it will be appreciated that such a development effort might be complex and time-consuming, but would nevertheless be a routine undertaking for those of ordinary skill in the art having the benefit of this disclosure.

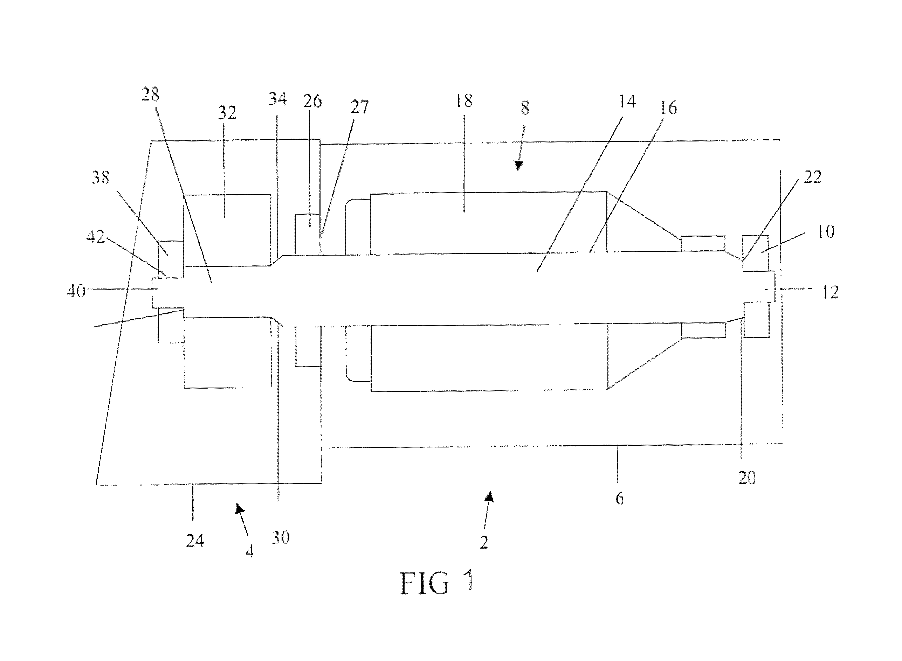

Turning now to the figures, and in particular to Figure 1, one embodiment according to the present invention is disclosed. In the embodiment of Figure 1, a motor assembly (2) is coupled to a drive gear assembly (4). Motor assembly (2) may include a motor shell (6) to house a motor, for example electric motor (8). It will be understood by those of skill in the art with the benefit of this disclosure, however, that electric motor (8) may an internal combustion engine as well, including, but not limited to, a gasoline engine, a diesel engine, or a liquid petroleum gas (LPG) engine.

Electric motor (8) may include a first friction reducing support, for example motor bearing (10). Motor bearing (10) may be located at a first end (12) of motor assembly (2) to rotatably support a shaft, for example extended drive shaft (14).

Extended drive shaft (14) may be housed in a drive shaft housing (16) which is defined by an armature (18) of motor assembly (2). Armature (18) may include the rotating part of motor assembly (2). In the embodiment shown, armature (18) may comprise copper wire wound around an iron core.

In a conventional electric motor, a drive shaft may extend just an inch or two beyond a motor shell. The present embodiment, on the other hand, may include drive shaft (14) which is an extended drive shaft and therefore extended drive shaft (14) may extend from motor shell (6) beyond the typical inch or two. In one embodiment, extended drive shaft (14) extends from motor shell (6) a distance between two and twenty inches. In one embodiment the extended drive shaft (14) extends a distance between three and fifteen inches. In another embodiment the extended drive shaft (14) extends a distance between five and ten inches.

Extended drive shaft (14) may include a first tapered section, for example step (20). Step (20) provides a shoulder (22) against which motor bearing (10) may abut at first end (12). Shoulder (22) defines a motor bearing surface.

Extended drive shaft (14) may extend into drive gear assembly (4) as shown in Figure 1. Drive gear assembly (4) may be housed by an axle housing (24). Drive gear assembly (4) may define a lubricated seal, for example axle housing oil seal (26) which is arranged at oil seal surface (27), between the drive gear assembly and motor shell (6).

As Extended drive shaft (14) enters axle housing (24), extended drive shaft (14) defines an axle portion, for example vehicle drive axle (28). Extended drive shaft (14) advantageously extends well into axle housing (24) and eliminates the conventional use of a coupling to a separate vehicle drive axle. As mentioned above, the use of a coupling to connect a drive shaft to a vehicle drive axle is problematic. Such a coupling is prone to provide misalignment between the drive shaft and the vehicle drive axle. In addition, the coupling, which typically comprises a ten-tooth or nineteen tooth involute coupling, is subject to wear and produces noise. The introduction of the extend drive shaft (14) of the present invention eliminates or reduces the effects of misalignment, as extended drive shaft (14) and vehicle drive axle (28) comprise a single piece.

Extended drive shaft (14) may include another step (30) at the vehicle drive axle (28) portion of the drive shaft. The vehicle drive axle is receptive of an axle drive gear (32). Step (30) defines a shoulder (34) against which drive gear (32) may abut. Shoulder (34) comprises a gear surface. Axle drive gear may attach to vehicle drive axle (28) by a splined engagement or any other convenient arrangement. The splines may include square teeth, involute teeth, or other protrusions. In some embodiments drive axle (28) includes a plurality of splines (not shown) which engage mating recess (not shown) in drive gear (32). Axle drive gear (32) may engage and drive a vehicle wheel or axle, for example golf car wheel (36) discussed below.

Adjacent axle drive gear (32) may be another bearing, for example axle bearing (38). Axle bearing (38) rotatingly supports a second end (40) of drive shaft 14 comprising vehicle axle (28). Axle bearing (38) is shown to be opposite a motor side of axle drive gear (32). Another step (42) disposed in vehicle drive axle (28) may provide a shoulder (44) to abut axle bearing (38). In the embodiment shown, there are no other principle bearings necessary.

In prior motor systems which employ a coupling and/or a coupling sleeve to connect the drive shaft to a separate vehicle drive axle, there is the requirement to introduce a third bearing. Typically the third bearing is arranged between the coupling and the vehicle drive gear, and arranged to support the first end of the separate axle. The present invention, however, has provided an extended drive shaft (14) that does not need a second axle bearing (in addition to axle bearing (38)), because extended drive shaft (14) advantageously defines the vehicle drive axle (28) as well. Therefore, a bearing and a coupling, along with the noise, expense, and alignments problems associated therewith, may be eliminated from the motor and drive gear assemblies (2 and 4).

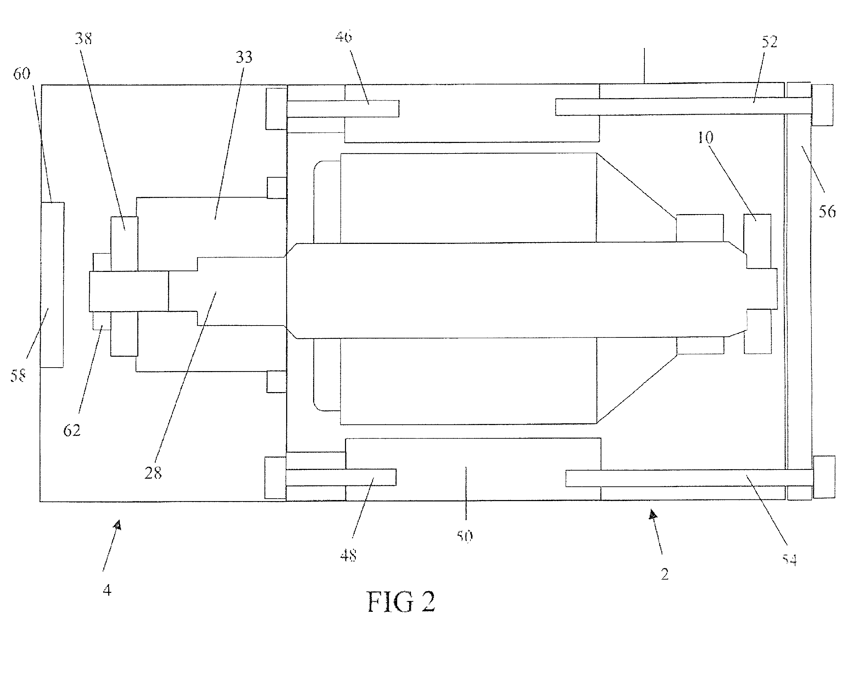

Referring next to Figure 2, a second embodiment of the present invention is shown. In the embodiment of Figure 2, there is shown a plurality of fasteners, for example screws (46 and 48) for attaching the motor assembly (2) to the drive gear assembly (4). As shown, motor assembly (2) may include a stator core (50), into which screws (46 and 48) may extend. A second plurality of fasteners, for example screws (52 and 54), may attach a plate 56 to motor shell (6) to enclose the motor shell. Screws 52 and 54 may also extend into stator core (50).

According to the embodiment of Figure 2, there may be an access port (58) disposed in axle housing (24), which may facilitate access into the interior of axle housing (24). Access port (58) may be closed by introduction of an access port plug (60), which is shown in the figure. Access port (58) may facilitate access to, for example, a fastener such as a nut (62). Nut (62) may ensure that axle bearing (38) and an axle drive gear with seal seat (33) are properly positioned and prevent the migration of each along vehicle drive axle (28).

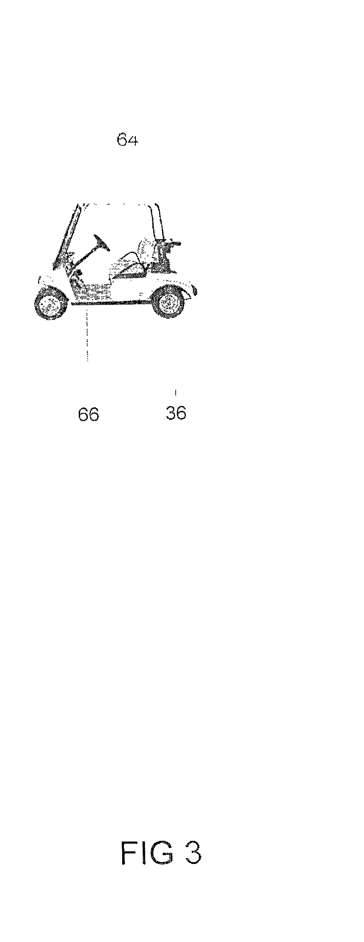

Motor assembly (2), drive gear assembly (4), and the components of each may be adapted for use with a motorized vehicle, for example electric golf cart (64) shown in Figure 3. Motor assembly (2) and drive gear assembly (4) may be mounted to chassis (66). Axle drive gear with seal seat (33) may be operatively connected directly to any of the golf car wheels, for example wheel (36). Employing motor assembly (2) and drive gear assembly (4) of the present invention, vibration, noise, and expense may all be reduced.

In some embodiments, multiple motor assemblies (2) and drive gear assemblies (4) may be mounted to chassis (66), each driving a different wheel (36).

For the sake of good order, various aspects of the invention are set out in the following clauses:-
1. An apparatus comprising:

a motor (8) having a motor shell (6);
a drive shaft housing (16) disposed in the motor (8); and
a drive shaft (14) disposed in the drive shaft housing (16) extending from the motor shell (6);
wherein the drive shaft (14) directly engages a vehicle axle drive gear (32).
2. The apparatus of clause 1, further comprising a drive gear assembly (4) coupled to the motor shell (6).
3. The apparatus of clause 2, wherein the drive shaft (14) disposed in the drive shaft housing (16) extends from the motor shell (6) into the drive gear assembly (4).
4. The apparatus of clause 3, wherein the drive shaft (14) comprises a drive axle (28) portion.
5. The apparatus of clause 4, further comprising only one motor bearing (10) and only one axle bearing (38).
6. The apparatus of clause 5, wherein the only one axle bearing (38) is disposed at a first end of the drive shaft (14) and the only one motor bearing (10) is disposed at a second end of the drive shaft (14), wherein the first end of the drive shaft (14) is located opposite a motor side of the axle drive gear (32).
7. The apparatus of clause 6, further comprising a nut (62) attached to the first end of the drive shaft (14) for securing the axle bearing (38) to the drive shaft (14).
8. The apparatus of clause 2, further comprising an access port (58) in the drive gear assembly (4).
9. The apparatus of clause 2, wherein there is no motor coupling or motor coupling sleeve between the drive shaft (14) and the drive gear assembly (4).
10. The apparatus of clause 2, further comprising a lubrication seal between the motor shell (6) and the drive gear assembly (4).
11. The apparatus of clause 1, further comprising a plurality of splines disposed at a first end of the drive shaft (14), the plurality of splines engaging mating recesses of the vehicle axle drive gear (32).
12. The apparatus of clause 11, wherein the splines comprise square teeth.
13. The apparatus of clause 11, wherein the splines comprise involute teeth.
14. The apparatus of clause 1, wherein the drive shaft (14) comprises a plurality of steps for providing one or more shoulder surfaces.
15. The apparatus of clause 14, wherein the one or more shoulder surfaces comprise at least one of an axle bearing surface, a gear surface, and an oil seal surface (27).
16. The apparatus of clause 1, wherein the motor (8) is an electric motor.
17. The apparatus of clause 16, wherein the electric motor (8) is an electric vehicle motor.
18. The apparatus of clause 17, wherein the electric vehicle motor is a golf car motor and the electric vehicle motor is coupled to a golf car (64) for driving at least one wheel (36) thereof.
19. An electric vehicle comprising:
   a chassis (66);
   a plurality of wheels (36); and
   an electric motor (8) for driving at least one of the plurality of wheels (36); wherein the electric motor (8) comprises a drive shaft (14) directly engaged with an axle drive gear (32), the axle drive gear (32) operatively connected to an axle of the at least one of the plurality of wheels (36).
20. The vehicle of clause 19, wherein the electric motor (8) and axle drive gear (32) comprise no more than two bearings.
21. The vehicle of clause 19, wherein the vehicle is a golf cart (64).
22. The vehicle of clause 19, wherein the electric motor (8) further comprises a motor shell (6), and the drive shaft (14) comprises an extended drive shaft extending from the motor shell (6).
23. The vehicle of clause 22, wherein the extended drive shaft (14) extends from the motor shell (6) at least three inches.
24. A method of driving a vehicle wheel (36) comprising the step of directly coupling a motor drive shaft (14) to a wheel axle drive gear (32).
25. The method of clause 24, wherein the motor drive shaft (14) is operatively connected to an electric motor (8); and wherein the electric motor (8), motor drive shaft (14), and wheel axle drive gear (32) comprise no more than two bearings.
26. The method of clause 24, wherein the vehicle wheel (36) is attached to an electric golf cart (64).

## Claims

1. An apparatus comprising:
a motor (8) having a motor shell (6);
a drive shaft housing (16) disposed in the motor (8); and
a drive shaft (14) disposed in the drive shaft housing (16) extending from the motor shell (6);
wherein the drive shaft (14) directly engages a vehicle axle drive gear (32).

2. The apparatus of claim 1, further comprising a drive gear assembly (4) coupled to the motor shell (6).

3. The apparatus of claim 2, wherein the drive shaft (14) disposed in the drive shaft housing (16) extends from the motor shell (6) into the drive gear assembly (4).

4. The apparatus of claim 3, wherein the drive shaft (14) comprises a drive axle (28) portion.

5. An electric vehicle comprising:
a chassis (66);
a plurality of wheels (36); and
an electric motor (8) for driving at least one of the plurality of wheels (36); wherein the electric motor (8) comprises a drive shaft (14) directly engaged with an axle drive gear (32), the axle drive gear (32) being operatively connected to an axle of the at least one of the plurality of wheels (36).

6. The vehicle of claim 5, wherein the electric motor (8) and axle drive gear (32) comprise no more than two bearings.

7. The vehicle of claim 5 or 6, wherein the vehicle is a golf cart (64).

8. A method of driving a vehicle wheel (36) comprising the step of directly coupling a motor drive shaft (14) to a wheel axle drive gear (32).

9. The method of claim 8, wherein the motor drive shaft (14) is operatively connected to an electric motor (8); and wherein the electric motor (8), motor drive shaft (14), and wheel axle drive gear (32) comprise no more than two bearings.

10. The method of claim 8, wherein the vehicle wheel (36) is attached to an electric golf cart (64).
